# EUROPEAN PATENT SPECIFICATION

(11) **EP 1 545 959 B1**
(45) Date of publication and mention of the grant of the patent: **07.03.2007**
(21) Application number: 03784476.8
(22) Date of filing: 02.07.2003
(51) Int. Cl.: B62D 5/04

(54) **Electric power steering apparatus**
Elektische Servolenkvorrichtung
Dispositif éléctrique de direction

(30) Priority: 09.08.2002 JP 2002234048
(43) Date of publication of application: 29.06.2005
(73) Proprietor: HONDA GIKEN KOGYO KABUSHIKI KAISHA, Tokyo 107-8556 (JP)
(72) Inventor: FURUMI, Hiroshi, c/o Honda R & D Co., Ltd., Wako-shi, Saitama 351-0193 (JP); TSURUMIYA, Osamu, c/o Honda R & D Co., Ltd., Wako-shi, Saitama 351-0193 (JP); ICHIMURA, Hiroshi, c/o Honda R & D Co., Ltd., Wako-shi, Saitama 351-0193 (JP); INABA, Kazuhiko, c/o Honda R & D Co., Ltd., Wako-shi, Saitama 351-0193 (JP); MIYASHITA, Katsuyuki, c/o Honda R & D Co., Ltd., Wako-shi, Saitama 351-0193 (JP); YAGINUMA, Takahiro, c/o Honda R & D Co., Ltd., Wako-shi, Saitama 351-0193 (JP); SUGANO, Tomoaki, c/o Honda R & D Co., Ltd., Wako-shi, Saitama 351-0193 (JP); KITAZAWA, Hirokazu, c/o Honda R & D Co., Ltd., Wako-shi, Saitama 351-0193 (JP); MORISHITA, Fumihiro, c/o Honda R & D Co., Ltd., Wako-shi, Saitama 351-0193 (JP)
(74) Representative: Herzog, Markus
(86) International application number: PCT/JP2003/008402
(87) International publication number: WO 2004/014713

(56) References cited:
- EP-A- 0 521 450
- EP-A- 0 857 638
- WO-A-02/058985
- DE-A- 19 902 556
- GB-A- 2 259 892
- US-A- 4 765 426
- US-A1- 2001 030 075
- PATENT ABSTRACTS OF JAPAN vol. 16, no. 321 (M-1279), 14 July 1992 (1992-07-14) -& JP 04 090970 A (RHYTHM ), 24 March 1992 (1992-03-24)
- PATENT ABSTRACTS OF JAPAN vol. 1995, no. 3, 28 April 1995 (1995-04-28) -& JP 06 344927 A (KOYO SEIKO), 20 December 1994 (1994-12-20)
- PATENT ABSTRACTS OF JAPAN , 2 October 2001 (2001-10-02) -& JP 2001 151125 A (SHOWA), 5 June 2001 (2001-06-05)

## Description

### Technical Field

The present invention relates to an improvement in an electric power steering apparatus.

### Background Art

In recent years, many vehicles employ electric power steering apparatuses for reducing steering forces with which drivers turn steering wheels, so that the drivers steer the vehicles in comfort. These apparatuses are often used in large-sized vehicles as well. For the large-sized vehicles including the electric power steering apparatuses, electric motors of the apparatuses unavoidably become large in size in order to produce greater assisting torques. However, the electric motors should be sized to be disposed within small spaces of the vehicles. The vehicles must include circuits of large capacity for driving the electric motors. Providing these circuits would lead to increased cost for the vehicles.

To address the above problems, there have been developed electric power steering apparatuses including two small-sized electric motors instead of one large-sized electric motor. These electric power steering apparatuses are known from, for example, Japanese Patent Laid-Open Publication No. HEI 5-155343 entitled "ELECTRIC POWER STEERING APPARATUS".

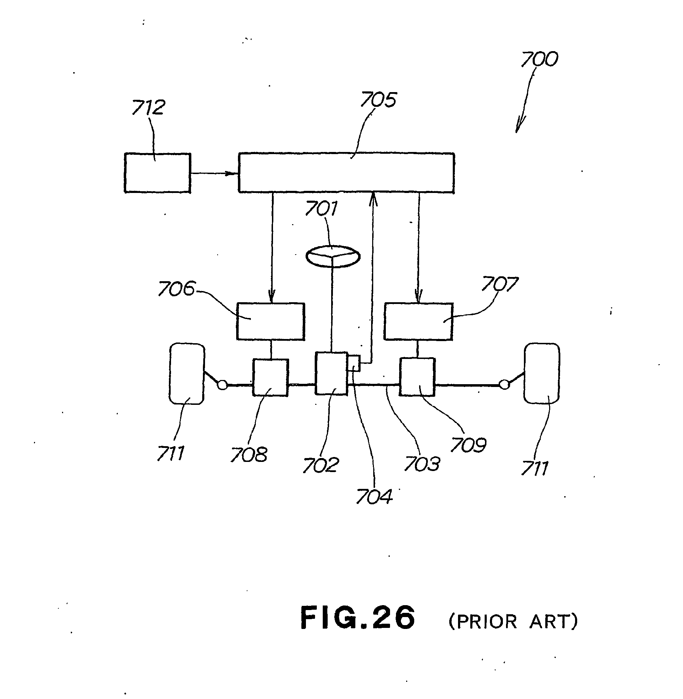

Fig. 26 hereof diagrammatically shows the electric power steering apparatus disclosed in the publication.

The electric power steering apparatus designated generally at 700 includes a steering wheel 701, a steering gear 702 connected to the steering wheel 701, a rack shaft 703 connected to right and left vehicle wheels 711, 711, a steering torque sensor 704 attached to the gear 702, a control device 705 operable in response to operation of the sensor 704, assisting motors 706, 707 to be controlled by the control device 705, and steering gears 708, 709 to be driven by the motors 706, 707, respectively.

When the steeringwheel 701 is turned by undergoing a steering torque, the steering gear 702 transmits the steering torque to the rack shaft 703. Concurrently, the control device 705 drives the motors 706, 707 in correspondence to the steering torque detected by the torque sensor 704. The motors 706, 707 then produce assisting torques corresponding to the steering torque. The steering gears 708, 709 transmit the assisting torques from the motors 706, 707 to the rack shaft 703. The rack shaft 703 then turns the wheels 711, 711. Designated by reference numeral 712 is a vehicle speed sensor.

The electric power steering apparatus 700 should become as small in size as possible for disposition within a small space of a vehicle. Reducing the size of the electric power steering apparatus 700 requires taking into account where to position the two electric motors. Accordingly, there is left a room for improvement in the electric power steering apparatus.

DE 199 02 556 A, on which the preamble of claim 1 is based discloses an electric power steering system with two electric motors 2, 3 acting through respective worm gear mechanisms 15, 17/16, 18 on the rack shaft. One of the pinion shafts 11, 12 can be directly coupled to the steering shaft.

JP 04 090970 A shows two electric motors 13, 14 acting on the rack shaft through respective worm gears 15, 17/16, 18 separately from the steering shaft.

US-A-4765426 shows an electric power steering apparatus with only one electric motor acting on the rack shaft through a pulley drive and a ball screw mechanism.

GB-A-2259892, Fig. 1 shows a steer-by-wire construction with two electric motors 25L, 25R both acting on the worm gear on a tie rod through a common ball screw mechanism 20.

EP-A-0857638 shows a steer-by-wire construction with a first electric motor M1 acting onto the rack shaft through a ball screw mechanism 58, 59 and a second electric motor M2 acting onto the rack shaft through a worm gear mechanism 4.

### Disclosure of the Invention

An object of the present invention is to provide an electric power steering apparatus including two electric motors each disposed in such a position as to reduce the size of the electric power steering apparatus.

According to the present invention, there is provided an electric power steering apparatus comprising a steering wheel; a rack shaft to be connected to vehicle wheels, the rack shaft being connected to the steering wheel through a steering shaft and a rack-and-pinion mechanism; two electric motors positioned adjacent the rack shaft, characterized in that the two electric motors are connected to the rack shaft through belt transmission mechanisms and a single ball screw.

The two electric motors are provided around the rack shaft for transmitting to the vehicle wheels the steering torque applied to the steering wheel. More specifically, the electric motors are connected via the belt transmission mechanisms and the small-sized single ball screw to the rack shaft. The two electric motors are positioned adjacent the rack shaft in close proximity to each other. Since the electric motors are thus positioned compactly, the electric power steering apparatus is small in size.

### Brief Description of Drawings

Certain preferred embodiments of the present invention will hereinafter be described in detail, by way of example only, with reference to the accompanying drawings, in which:
Fig. 1 is a schematic view of an electric power steering apparatus according to a first embodiment which is not covered by the enclosed claims;
Fig. 2 is a front elevation view of a housing of the apparatus of Fig. 1;
Fig. 3 is a cross-sectional view taken along line 3-3 of Fig. 2;
Fig. 4 is a cross-sectional view taken along line 4-4 of Fig. 3;
Fig. 5 is a cross-sectional view taken along line 5-5 of Fig. 2;
Fig. 6 is a cross-sectional view taken along line 6-6 of Fig. 5;
Fig. 7 is a schematic view of an electric power steering apparatus according to a second embodiment which is not covered by the enclosed claims;
Fig. 8 a front elevation view of a housing of the apparatus of Fig. 7;
Fig. 9 is a view showing in cross-section the housing, a third electric motor and a ball screw of the apparatus of Fig. 7;
Fig. 10 is a schematic view of an electric power steering apparatus according to a third embodiment which is not covered by the enclosed claims;
Fig. 11 is a perspective view of the apparatus of Fig. 10;
Fig. 12 is a cross-sectional view taken along line 12-12 of Fig. 11;
Fig. 13 is a cross-sectional view taken along line 13-13 of Fig. 12;
Fig. 14 is a schematic view of an electric power steering apparatus according to a fourth embodiment of the present invention;
Fig. 15 is a front elevation view showing a housing of the apparatus of Fig. 14;
Fig. 16 is a cross-sectional view taken along line 16-16 of Fig. 15;
Fig. 17 is a view of a portion of the apparatus of Fig. 14 including the housing, a ball screw, a rack shaft, first and second electric motors and first and second belt transmission mechanisms, with the housing and the ball screw fragmentarily shown in cross-section;
Fig. 18 is a schematic view of an electric power steering apparatus according to a fifth embodiment of the present invention;
Fig. 19 is a view of a portion of the apparatus of Fig. 18 including a housing, the rack shaft, the first and second electric motors, the first and second belt transmission mechanisms and a ball screw, with the housing and the ball screw fragmentarily shown in cross-section;
Fig. 20 is a front elevation view of the housing and the first and second electric motors of the apparatus of Fig. 18;
Fig. 21 is a schematic view of an electric power steering apparatus according to a sixth embodiment which is not covered by the enclosed claims;
Fig. 22 is a front elevation view of a housing of the apparatus of Fig. 21;
Fig. 23 is a cross-sectional view taken along line 23-23 of Fig. 22;
Fig. 24 is a schematic view of an electric power steering apparatus according to a seventh embodiment which is not covered by the enclosed claims;
Fig. 25 is a front elevation view of a housing of the apparatus of Fig. 24; and
Fig. 26 is a conventional electric power steering apparatus;

### Best Mode for Carrying Out the Invention

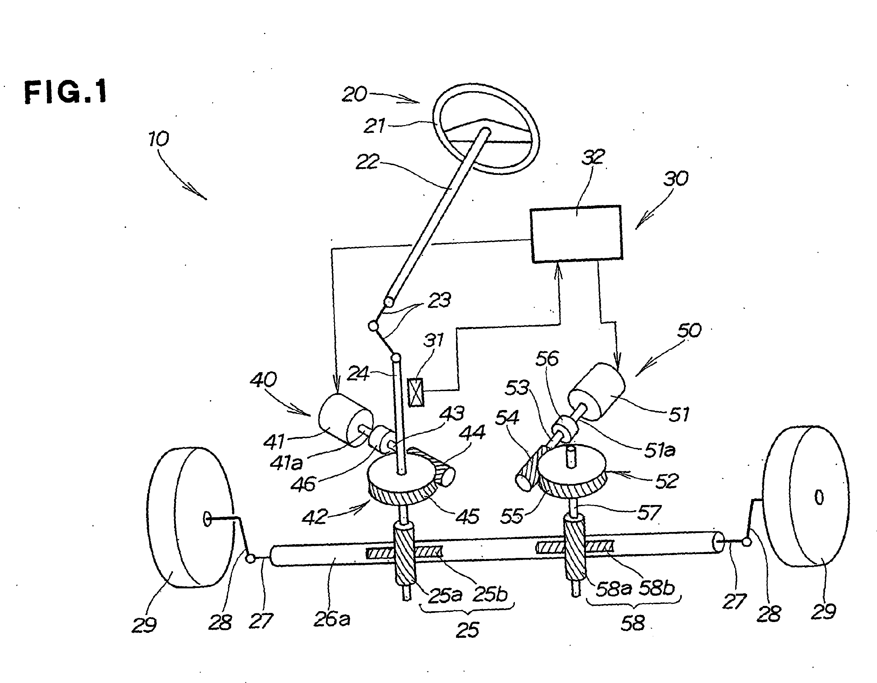

Referring to Fig. 1 through Fig. 6, there is shown an electric power steering apparatus 10 according to the first embodiment.

The apparatus 10 includes a steering system 20 and an assist torque mechanism 30 for providing an assist torque to the steering system 20.

As shown in Fig. 1, the steering system 20 includes a steering wheel 21, a steering shaft 22 attached at one end to the steering wheel 21, a universal joint 23 having its one end connected to the other end of the steering shaft 22, a pinion shaft 24 having its one end connected to the other end of the universal joint 23, and a rack shaft 26a connected to the other end of the pinion shaft 24 through a rack-and-pinion mechanism 25. The rack shaft 26a has a right end connected to one end of a right tie rod 27. The rack shaft 26a has a left end connected to one end of a left tie rod 27. The right tie rod 27 is connected via a knuckle 28 to a right vehicle wheel 29. The left tie rod 27 is connected via a knuckle 28 to a left vehicle wheel 29. The right and left ends of the rack shaft 26a outputs a steering torque applied by a driver to the steering wheel 21. The thus arranged apparatus 10 is often called "end-take-off-type" steering apparatus.

The rack-and-pinion mechanism25 includes a pinion 25a formed on the pinion shaft 24, and a rack 25b formed on the rack shaft 26a. The pinion 25a meshes with the rack 25b.

When a driver applies the steering torque to the steering wheel 21 to turn the steering wheel, the steering torque is transmitted via the rack-and-pinion mechanism 25, the rack shaft 26a and the tie rods 27, 27 to the right and left wheels 29, 29.

The assist torque mechanism 30 includes a steering torque sensor 31, a control section 32, and first and second assist torque producing devices 40, 50. The sensor 31 is a magnetostrictive torque sensor.

When the sensor 31 detects the steering torque to produce a detection signal indicative of the detection of the steering torque, the control section 32 produces a motor controlling signal on the basis of the detection signal. First and second electric motors 41, 51 produce assist torques or motive powers corresponding to the steering torque on the basis of the motor controlling signal. The motive powers produced by the first and second electric motors 41, 51 are transmitted to the wheels 29, 29, as will be explained later.

The first assist torque producing device 40 includes the first electric motor 41 and a first worm gear mechanism 42 serving as a torque transmitting member for transmitting the assist torque produced by the first electric motor 41 to the pinion shaft 24.

The first worm gear mechanism 42 includes a first worm shaft 43 having a first worm 44 formed thereon, and a first worm wheel 45 mounted on the pinion shaft 24. The first worm 44 meshes with the first worm wheel 45. The first electric motor 41 has a motor shaft 41a connected via a coupling 46 to the first worm shaft 43.

The second assist torque producing device 50 includes the second electric motor 51, a second worm gear mechanism 52, an assist pinion shaft 57 and an assist rack-and-pinion mechanism 58. The second electric motor 51 is connected to the rack shaft 26a through the second worm gear mechanism 52, the assist pinion shaft 57 and the assist rack-and-pinion mechanism 58. The assist rack-and-pinion mechanism 58 includes a pinion 58a formed on the assist pinion shaft 57, and a rack 58b formed on the rack shaft 26a. The pinion 58a meshes with the rack 58b.

The second worm gear mechanism 52 includes a second worm shaft 53 having a second worm 54 formed thereon, and a second worm wheel 55 mounted on the assist pinion shaft 57. The second worm 54 meshes with the second worm wheel 55 . The second electric motor 51 has a motor shaft 51a connected via a coupling 56 to the second worm shaft 53.

The assist torque produced by the first electric motor 41 is transmitted through the coupling 46, the first worm gear mechanism 42, the pinion shaft 24 and the rack-and-pinion mechanism 25 to the rack shaft 26a. The assist torque produced by the second electric motor 51 is transmitted through the coupling 56 , the second worm gear mechanism 52, the assist pinion shaft 57 and the assist rack-and-pinion mechanism 58 to the rack shaft 26a.

Accordingly, the steering torque produced by the driver is combined with the assist torques produced by the first and second electric motors 41, 51 to thereby provide a composite torque. The composite torque is applied to the rack shaft 26a to thereby steer or turn the wheels 29, 29.

As is apparent from the foregoing description, there is provided the electric power steering apparatus 10 comprising: the steering wheel 22; the rack shaft 26a to be connected to the vehicle wheels 29, 29, the rack shaft 26a being connected to the steering wheel 22 through the steering shaft 22 and the rack-and-pinion mechanism 25; the first electric motor 41 for producing the motive power to be applied between the steering shaft 22 and the rack-and-pinion mechanism 25; and the second electric motor 51 for producing the motive power to be applied to the rack shaft 26a.

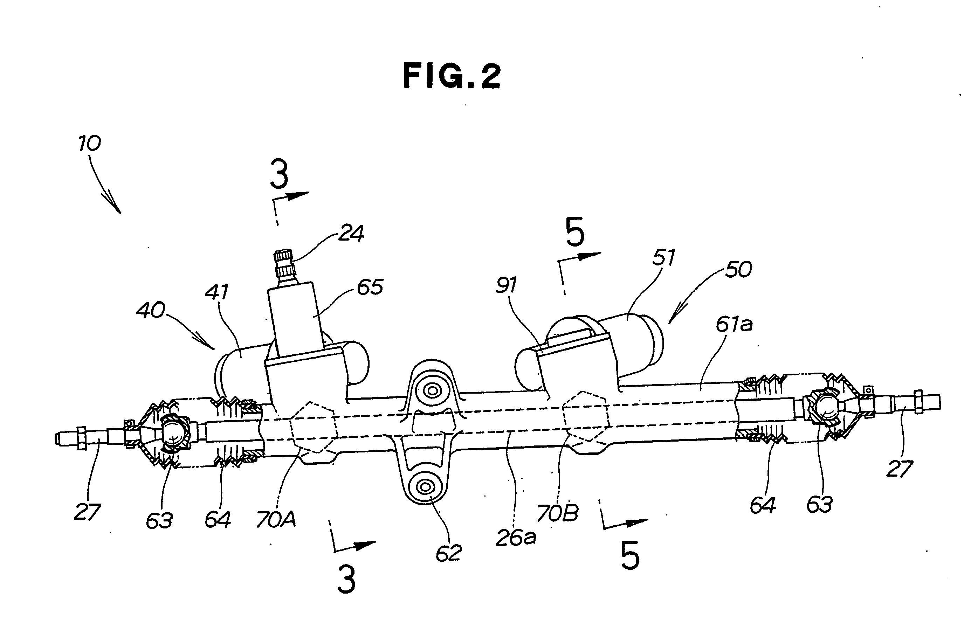

As shown in Fig. 2, the rack shaft 26a is accommodated within a housing 61a extending laterally of a vehicle body (not shown). The rack shaft 26a is slidable axially of the housing 61a. The housing 61a has an attachment portion 62 to be attached to the vehicle body. Reference numerals 63, 64 denote a ball joint and a dust boot, respectively.

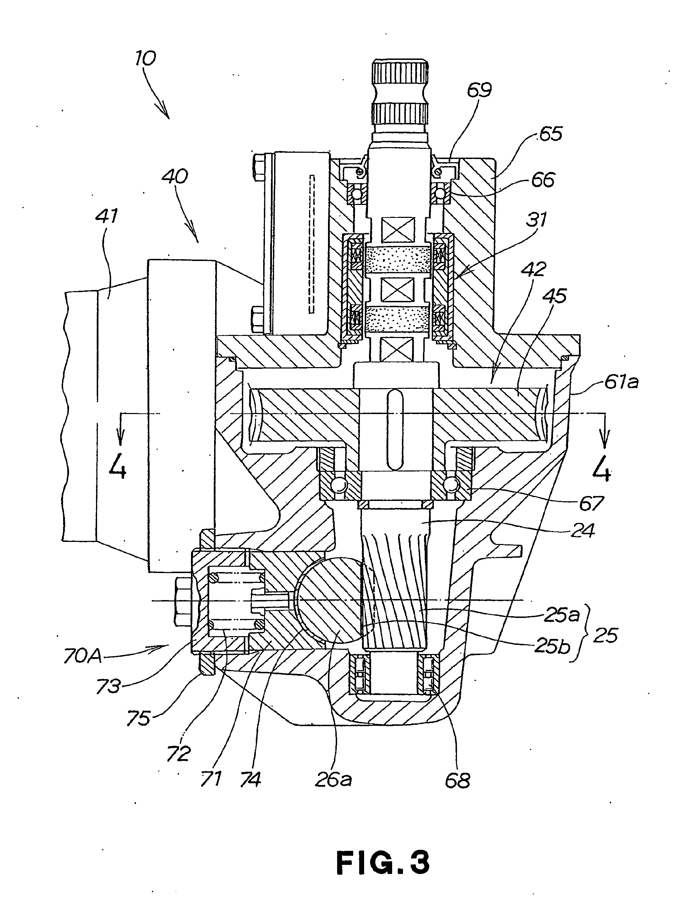

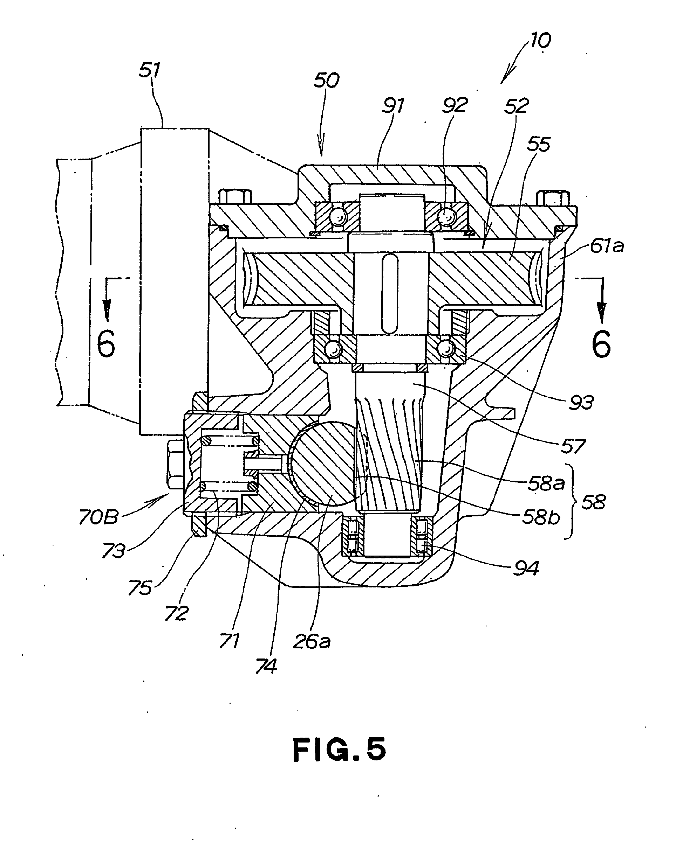

As shown in Fig. 3, the housing 61a houses therein the rack-and-pinion mechanism 25 and the first worm gear mechanism 42. The housing 61a has two top portions opened upwardly. One of the top portions is closed by a lid 65. The other is closed by a lid 91 (see Fig. 2 or Fig. 5). The pinion shaft 24 is inserted through the lid 65 into the housing 61a. The steering torque sensor 31 is positioned proximate the pinion shaft 24 within the lid 65.

The pinion shaft 24 has its upper, middle and lower portions rotationally supported by three bearings 66, 67, 68, respectively. These bearings are vertically spaced from each other. The pinion shaft 24 has the middle and lower portions housed in the housing 61a. The upper portion of the pinion shaft 24 is disposed within the lid 65. The housing 61a has a rack guide 70A housed therein.

The rack guide 70A is provided for forcing a back surface portion of the rack shaft 26a opposite the rack 25b. More specifically, the rack guide 70A includes a guide portion 71, an adjustment bolt 73, and a compression spring 72 interposed between the guide portion 71 and the bolt 73. The bolt 73 is disposed to cause the spring 72 to force the guide portion 71 against the back surface portion of the rack shaft 26a.

The bolt 73 is screwed into the housing 61a, forcing the compression spring 72 in such a direction as to push the guide portion 71 with a force suitable for exerting a pre-load on the rack 25b. The rack 25b is pushed against the pinion 25a, undergoing the pre-load to thereby establish the meshing engagement with the pinion 25b. Reference numerals 69, 74, 75 denote an oil seal, a contact member and a lock nut, respectively. The rack shaft 26a is slidable along the contact member 74 with the back surface portion held in contact with the contact member 74.

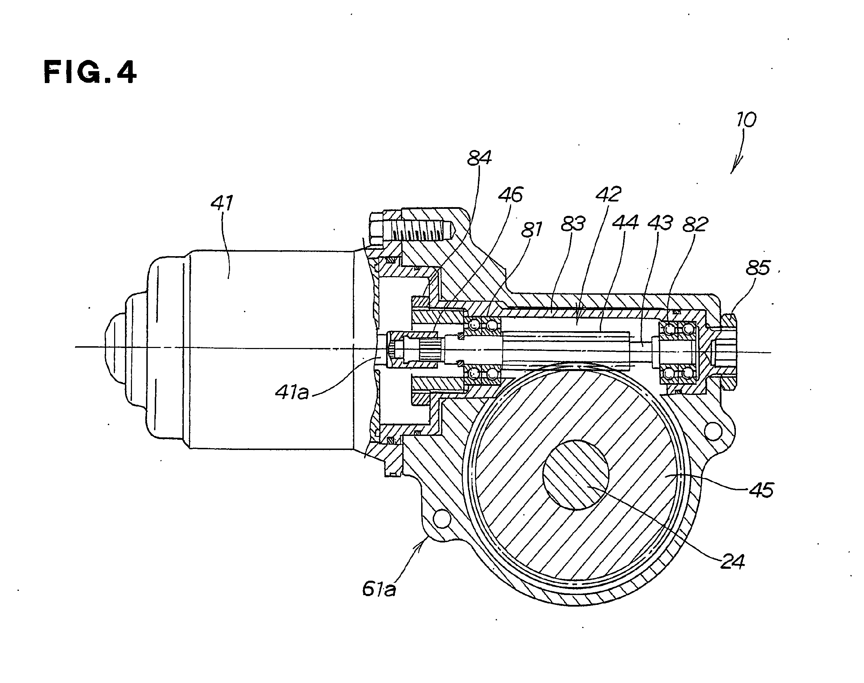

As shown in Fig. 4, the first electric motor 41 is attached to the housing 61a and has the motor shaft 41a extending substantially horizontally into the housing 61a.

The first worm shaft 43 extending horizontally has its opposite ends rotationally supported by bearings 81, 82. The first worm shaft 43 is enclosed in a hollow eccentric sleeve 83 disposed within the housing 61a. Reference numerals 84, 85 designate nuts. Rotating the sleeve 83 adjusts a backlash formed between the first worm 44 and the first worm wheel 45.

As shown in Fig. 5, the housing 61a houses therein the second worm gear mechanism 52 and the assist rack-and-pinion mechanism 58. The housing 61a has the top portion closed by the lid 91.

The assist pinion shaft 57 has its upper, middle and lower portions rotationally supported by bearings 92, 93, 94, respectively. These bearings 92, 93, 94 are vertically spaced from each other. The upper portion of the assist pinion shaft 57 is positioned above the top portion of the housing 61a and within the lid 91. The assist pinion shaft 57 has the middle and lower portions housed in the housing 61a. The housing 61a has a rack guide 70B housed therein.

The rack guide 70B is the same in construction as the rack guide 70A. That is, the rack guide 70B is provided for forcing a back surface portion of the rack shaft 26a opposite the rack 58b. Components of the rack guide 70B are denoted by the same reference numerals as the rack guide 70A.

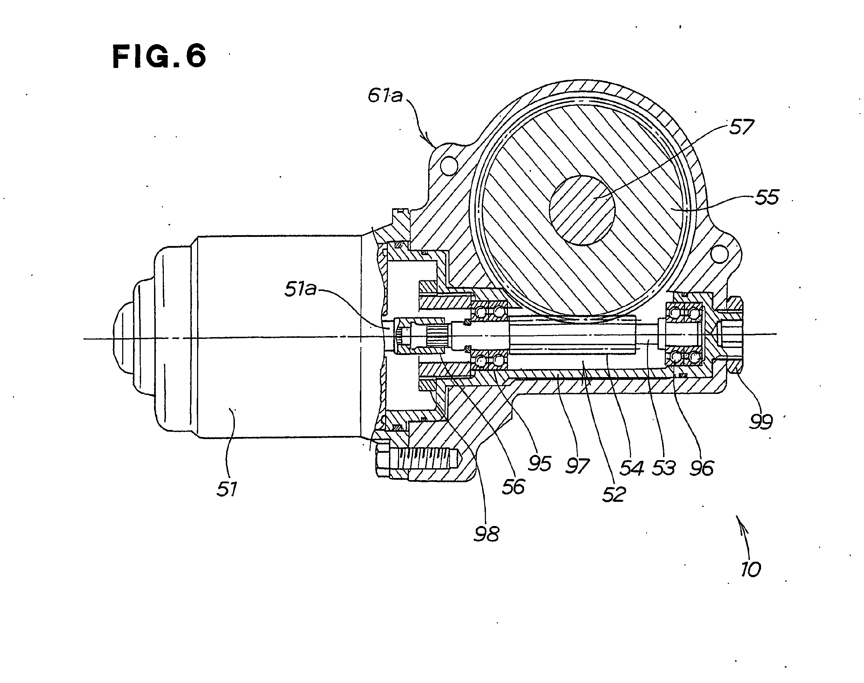

As shown in Fig. 6, the second electric motor 51 is attached to the housing 61a and has the motor shaft 51a substantially horizontally extending into the housing 61a.

The second worm shaft 53 extending horizontally has its opposite ends rotationally supported by bearings 95, 96. The second worm shaft 53 is enclosed in a hollow eccentric sleeve 97 disposed within the housing 61a. Reference numerals 98, 99 designate nuts. Rotating the sleeve 97 adjusts a backlash formed between the second worm 54 and the second worm wheel 55.

As discussed with reference to Fig. 1 through Fig. 6, the first electric motor 41 produces a motive power to be applied to the pinion shaft 24 disposed between the steering shaft 22 and the rack-and-pinion mechanism 25 while the second electric motor 51 produces a motive power to be applied to the rack shaft 26a. The first and second electric motors 41, 51 are positioned away from each other. The electric power steering apparatus 10 has the advantage that the electric motors can be more freely positioned in a manner suited to a space within the vehicle body. This makes it easier to determine a space where the electric motors are positioned. In addition, the thus arranged electric power steering apparatus 10 can be small in size.

Furthermore, the rack-and-pinion mechanism 25 for transmitting to the rack shaft 26a the steering torque applied to the steering wheel 21 and the assist torque produced by the first electric motor 41 is not subjected to the motive power supplied from the second electric motor 51. This arrangement helps the rack-and-pinion mechanism 25 maintain sufficient strength.

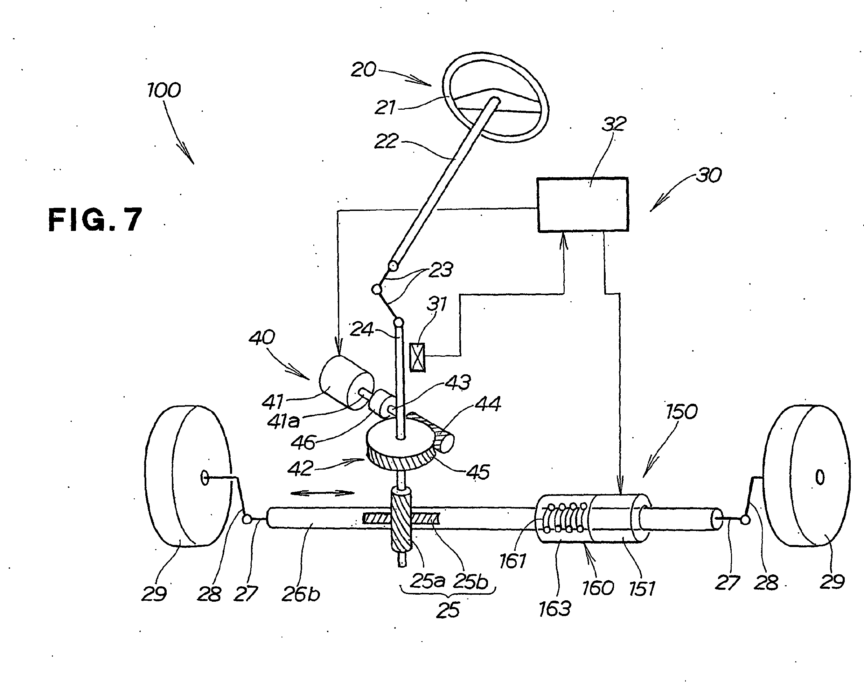

Referring to Fig. 7 through Fig. 9, there is shown an electric power steering apparatus 100 according to the second embodiment.

The electric power steering apparatus 100 is the same as the electric power steering apparatus 10 except that the assist torque mechanism 30 includes a third assist torque producing device 150 instead of the second assist torque producing device 50. In Fig. 7 to Fig. 9, the same components of the electric power steering apparatus 100 as those of the electric power steering apparatus 10 are identically numbered and their detail description will be omitted.

More specifically, the assist torque mechanism 30 of the apparatus 100 includes the steering torque sensor 31, the control section 32, and the first and third assist torque producing devices 40, 150. The third assist torque producing device 150 includes a third electric motor 151 and a ball screw 160 connecting the motor 151 to a rack shaft 26b therethrough.

As show in Fig. 7, the rack shaft 26b has the rack 25b formed on one end thereof. In addition to the rack 25b, the rack shaft 26b has a threaded portion 161 formed thereon. The rack 25b and the threaded portion 161 are provided separately from each other. The ball screw 160 has a nut 163 mounted on the threaded portion 161 as will be described later. The third electric motor 151 is hollowed to allow the rack shaft 26b to extend therethrough. The third electric motor 151 is connected to the nut 163. The nut 163 is positioned between the rack 25b and the third electric motor 151. The third electric motor 151 is often called "coaxial motor" .

On the basis of the motor controlling signal output from the control section 32, the first and third electric motors 41, 151 produce assist torques (motive powers) corresponding to the steering torque. The assist torque produced by the third electric motor 151 is transmitted through the ball screw 160 to the rack shaft 26b. The steering torque the driver applies to the steering wheel 21 and the assist torques produced by the first and third electric motors 41, 151 are combined together to provide a composite torque. The composite torque is transmitted to the rack shaft 26b to thereby steer or turn the wheels 29, 29.

In the electric power steering apparatus 100 according to the second embodiment , the steering wheel 21 is connected through the steering shaft 22 and the rack-and-pinion mechanism 25 to the rack shaft 26b. The rack shaft 26b is connected to the wheels 29, 29. The first electric motor 41 produces the motive power to be applied to the pinion shaft 24 disposed between the steering shaft 22 and the rack-and-pinion mechanism 25 while the third electric motor 151 produces the motive power to be applied to the rack shaft 26b.

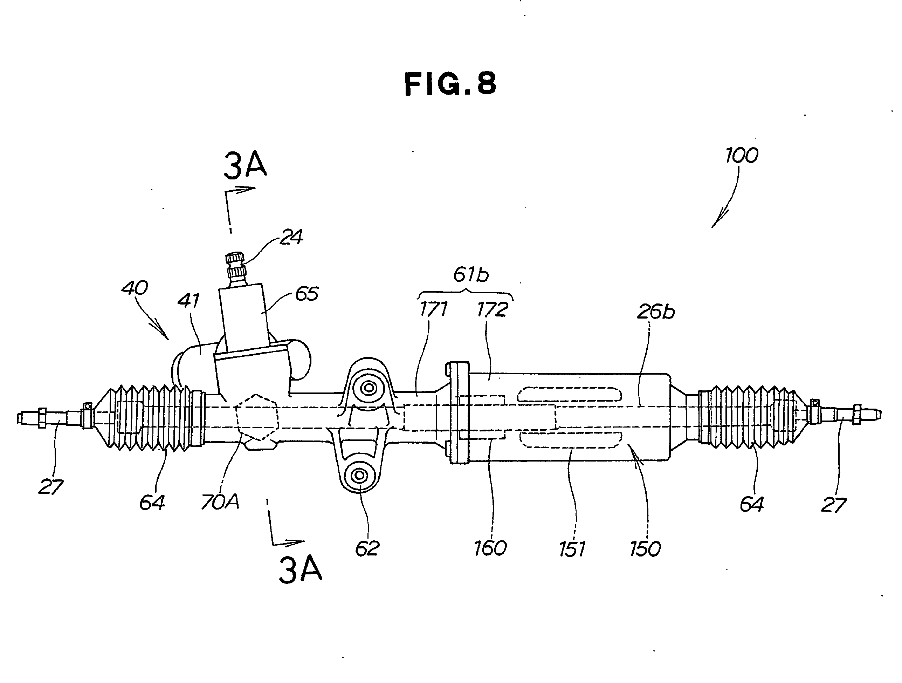

As shown in Fig. 8, the electric power steering apparatus 100 includes a housing 61b. The housing 61b includes first and second housing portions 171, 172 of generally tubular configuration. The first housing portion 171 has one end bolted to one end of the second housing portion 172 , thereby providing the housing 61b with an elongated gear box configuration. The second housing 172 serves as a motor case enclosing the third electric motor 151 therein.

It is to be understood that the first assist torque producing device 40 is arranged in the manner as described in relation to Fig. 3 and Fig. 4. Fig. 8 provides a cross-sectional view of Fig. 3 taken along line 3A-3A thereof to show the first assist torque producing device 40 in cross-section.

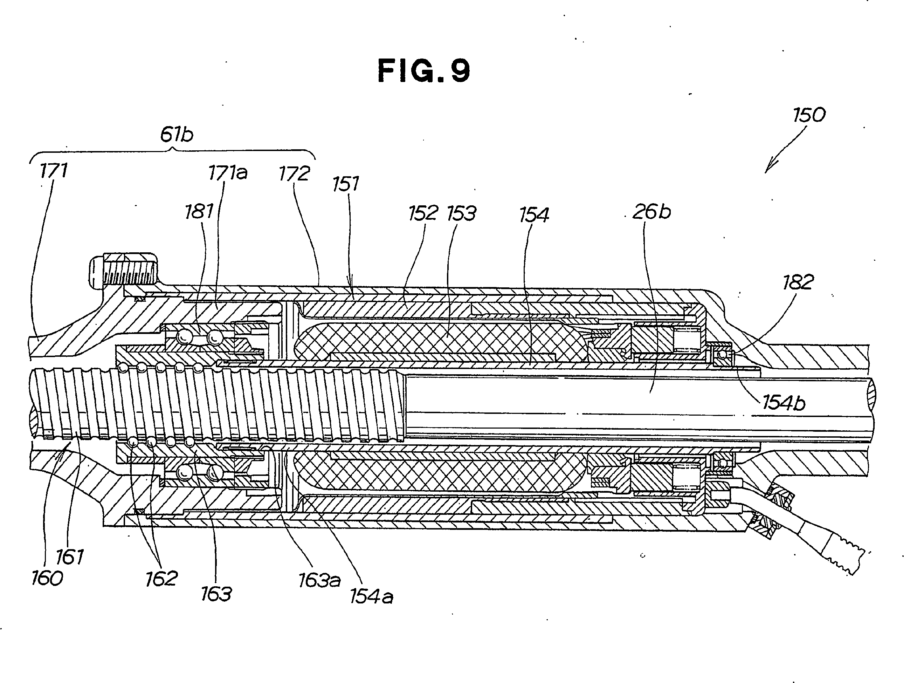

As shown in Fig. 9, the third electric motor 151 includes a cylindrical stator 152 fitted within the second housing portion 172, a rotor 153 disposed inside the stator 152, and a tubular motor shaft 154 united with the rotor 153. The motor shaft 154 is hollowed to allow the rack shaft 26b to extend therethrough. The motor shaft 154 is rotatable relative to the rack shaft 26b. The motor shaft 154 has its inner diameter greater than an outer diameter of the threaded portion 161.

The ball screw 160 is of conventional type and includes the threaded portion 161 serving as an external thread formed on the rack shaft 26b, plural balls 162 disposed on a peripheral surface of the threaded portion 161, and the nut 163 mounted on the balls 162. The nut 163 serves as an outer cylindrical member hollowed to allow the threaded portion 161 to extend therethrough. The nut 163 and the balls 162 of the ball screw 160 are capable of transmitting to the threaded portion 161 the assist torque produced by the third electric motor 151. The nut 163 has a threaded portion or a groove formed along an inner surface thereof. The groove is in the form of a helix. The balls 162 are guided along the groove. The nut 163 has a tube (not shown) formed therein. The tube extends between opposite ends of the groove. The tube is provided for guiding the respective balls, which have been guided to the one end of the groove, to the other end of the groove.

The first housing portion 171 includes a ball screw housing portion 171a fitted into the second housing portion 172. The ball screw housing portion 171a supports the nut 163 by means of a first bearing 181 such that the nut 163 is rotatable but unmovable axially. The nut 163 has a connection aperture 163a formed separately from the groove. The motor shaft 154 has an output end 154a fitted into the connection aperture 163a in such a manner as to transmit the motive power of the third electric motor 151 to the nut 163.

The output end 154a of the motor shaft 154 and the nut 163 are rotationally supported by the first bearing 181 within the first housing portion 171. The motor shaft 154 has another output end 154b opposite the output end 154a. The output end 154b is rotationally supported by a second first bearing 182 within the second housing portion 172.

As discussed with reference to Fig. 7 through Fig. 9, the first electric motor 41 produces the motive power to be applied to the pinion shaft 24 disposed between the steering shaft 22 and the rack-and-pinion mechanism 25 while the third electric motor 151 produces the motive power to be applied to the rack shaft 26b. The first and third electric motors 41, 151 are provided away from each other. The electric power steering apparatus 100 has the advantage that the electric motors can be more freely positioned in a manner suited to a space within the vehicle body. This makes it easier to determine a space where the electric motors are to be positioned. In addition, the electric power steering apparatus 100 can be small in size.

The electric power steering apparatus 100 includes the third electric motor 151 for producing the motive power to be applied to the rack shaft 26b through the ball screw 160 of small size. This makes it much easier to determine a space where the electric motors 41, 151 are positioned. Additionally, the electric power steering apparatus 100 can be small in size. Furthermore, there is no need for the aforementioned assist rack-and-pinionmechanism, assist pinion shaft and rack guide for transmitting the motive power of the third electric motor 151 to the rack shaft 26b. This is advantageous in that the rack shaft 26b can be shortened by a length along which the assist pinion shaft and the assist rack-and-pinion mechanism would be otherwise disposed. This leads to reduced cost for the rack shaft 26b.

Moreover, the transmission member, that is, the rack-and-pinion mechanism 25 for transmitting to the rack shaft 26b the steering torque applied to the steering wheel 21 and the assist torque produced by the first electric motor 41 is not subjected to the motive power supplied from the third electric motor 151. This arrangement helps the rack-and-pinion mechanism 25 maintain sufficient strength.

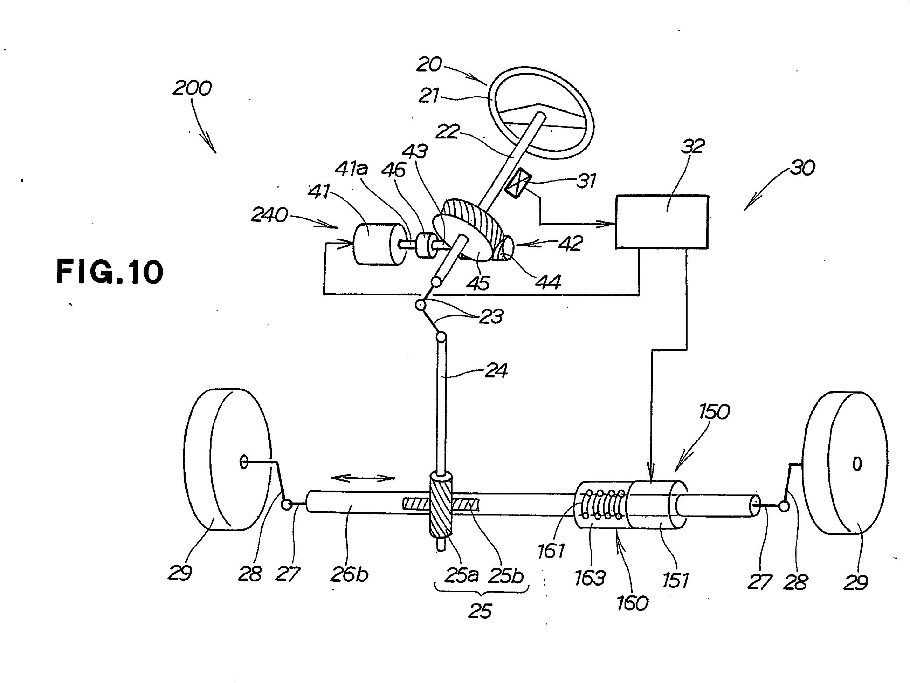

Referring to Fig. 10 through Fig. 13, there is shown an electric power steering apparatus 200 according to the third embodiment.

As shown in Fig. 10, the electric power steering apparatus 200 is the same as the electric power steering apparatus 100 except that the assist torque mechanism 30 includes a fourth assist torque producing device 240 instead of the first assist torque producing device 40. The fourth assist torque producing device 240 includes the first electric motor 41 disposed in such a position to provide a motive power to the steering shaft 22. In Fig. 10 to Fig. 13, the same components of the electric power steering apparatus 200 as those of the electric power steering apparatus 100 are identically numbered and their detail descriptions will be omitted.

The fourth assist torque producing device 240 includes the first electric motor 41 and the first worm gear mechanism 42 for transmitting to the steering shaft 22 the assist torque produced by the first electric motor 41. The first worm gear mechanism 42 includes the first worm shaft 43 having the first worm 44 formed thereon, and the first worm wheel 45 mounted on the steering shaft 22. The first worm 44 meshes with the first worm wheel 45.

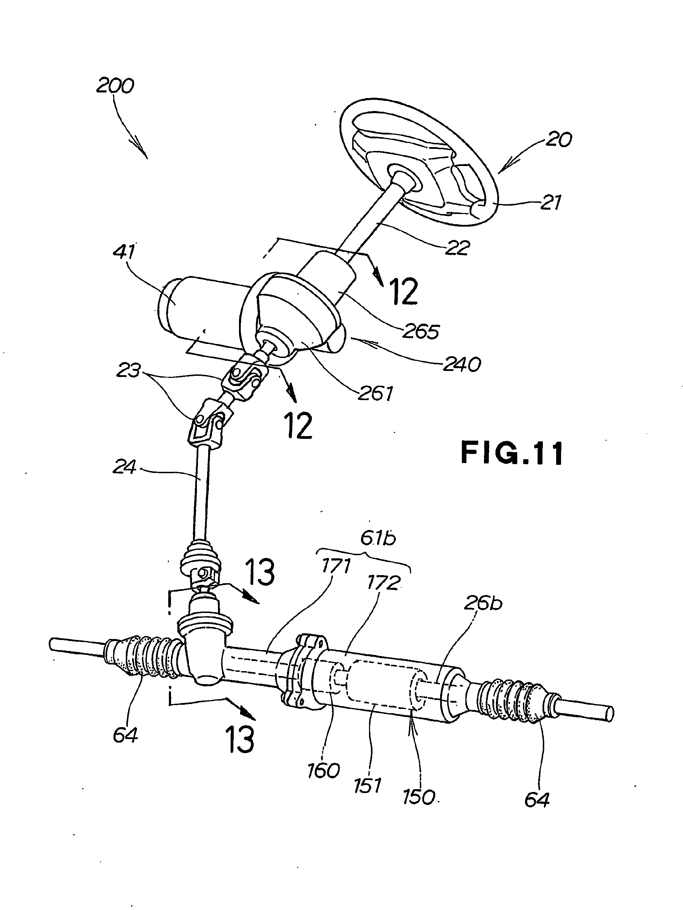

As shown in Fig. 11, the electric power steering apparatus 200 includes the steering system 20 and the third and fourth assist torque producing devices 150, 240.

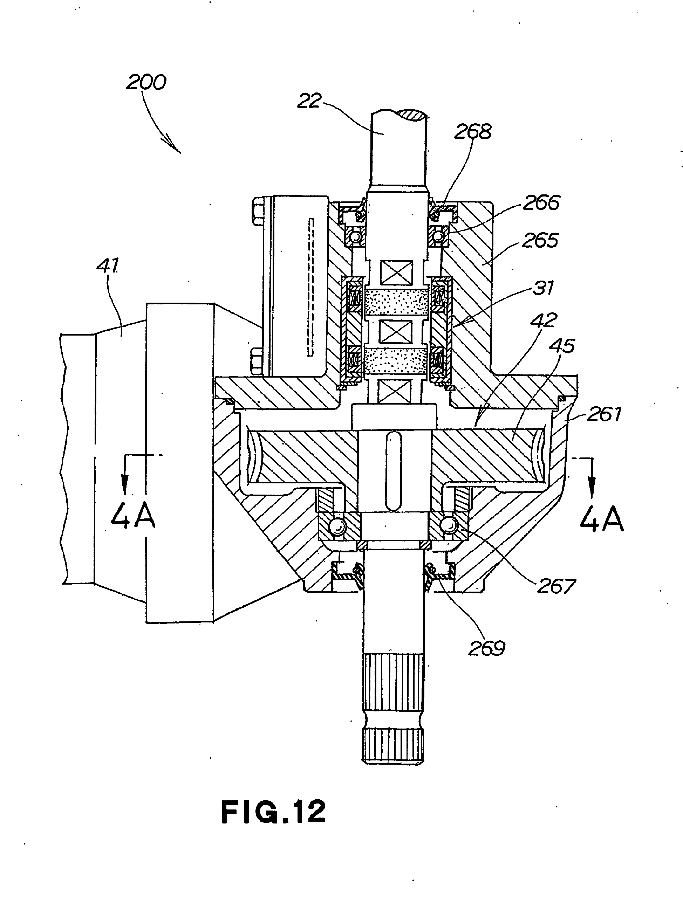

As shown in Fig. 12, the electric power steering apparatus 200 includes the steering shaft 22, the steering torque sensor 31 and the first worm gear mechanism 42. The first worm gear mechanism 42 is housed in a housing 261. The housing 261 has a top portion opened upwardly. The top portion is closed by a lid 265. The steering shaft 22 extends through the lid 265 and the housing 261. The steering torque sensor 31 is disposed proximate the steering shaft 22.

The steering shaft 22 has its upper and lower portions rotationally supported by upper and lower bearings 266, 267, respectively. The upper portion of the steering shaft 22 is disposed within the lid 265 while the lower portion of the steering shaft 22 is disposed within the housing 261. Reference numerals 268, 269 denote oil seals.

Fig. 12 provides a cross-sectional view of Fig. 4 taken along line 4A-4A thereof to show in cross-section the first worm gear mechanism 42 with the pinion shaft 24 replaced with the steering shaft 22.

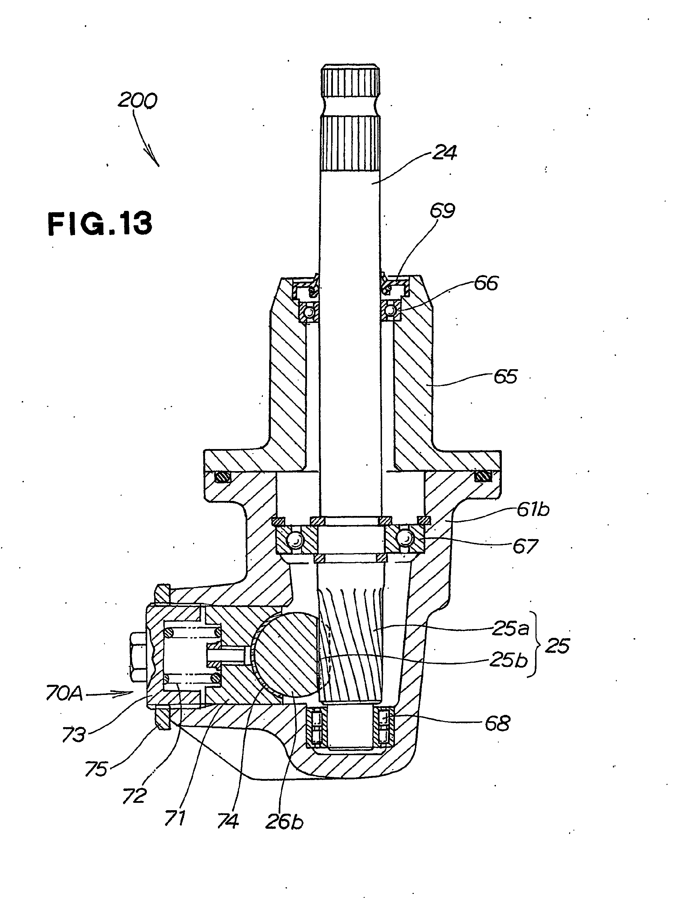

Fig. 13 is the view of Fig. 3 with the steering torque sensor 31 and the first worm gear mechanism 42 removed.

As discussed with reference to Fig. 10 through Fig. 13, the first electric motor 41 produces the motive power to be applied to the steering shaft 22 while the third electric motor 151 produces the motive power to be applied to the rack shaft 26b. The first and third electric motors 41, 151 are positioned away from each other. The electric power steering apparatus 200 has the advantage that the electric motors can be more freely positioned in a manner suited to a space within the vehicle body. This makes it easier to determine a space where the electric motors are positioned. In addition, the electric power steering apparatus 200 can be small in size.

Further, the pinion shaft 24 has no electric motor mounted thereto. In other words, around the pinion shaft 24, there can be formed a free space which would be otherwise occupied by the electric motors. Such a space can be advantageously utilized for other purposes.

As is apparent from Fig. 10 and Fig. 11, the electric power steering apparatus 200 includes the third electric motor 151 for producing the motive power to be transmitted via the ball screw 160 of small size to the rack shaft 26b. This makes it much easier for the vehicle to provide a space where the electric motors 41, 151 are positioned. The electric power steering apparatus 200 can be made small in size. Furthermore, there is no need for any assist rack-and-pinion mechanism, assist pinion shaft and rack guide for transmitting the motive power of the third electric motor 151 to the rack shaft 26b. This is advantageous in that the rack shaft 26b can be shortened by a length along which the assist pinion shaft and the assist rack-and-pinion mechanism would be otherwise disposed. This leads to reduced cost for the rack shaft 26b.

Moreover, the transmission member, that is, the rack-and-pinion mechanism 25 for transmitting to the rack shaft 26b the steering torque applied to the steering wheel 21 and the assist torque produced by the first electric motor 41 is not subjected to the motive power supplied from the third electric motor 151. This arrangement helps the rack-and-pinion mechanism 25 maintain sufficient strength.

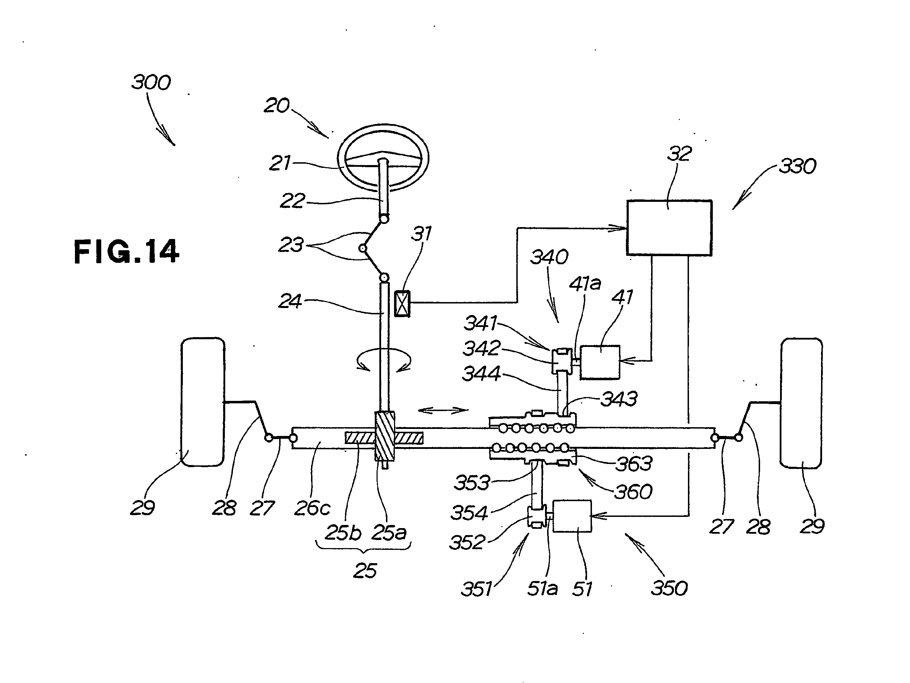

Referring to Fig. 14 through Fig. 17, there is shown an electric power steering apparatus 300 according to the fourth embodiment of the present invention. The electric power steering apparatus 300 is identical to the electric power steering apparatus 10 except the assist torque mechanism 30 is replaced with an assist torque mechanism 330, as will be described later. In Fig. 14 to Fig. 17, the same components of the apparatus 300 as those of the apparatus 10 are identically numbered and their detail descriptions will be omitted.

As shown in Fig. 14, when the sensor 31 detects the steering torque to produce the detection signal, the control section 32 produces the motor controlling signal on the basis of the detection signal. The first and second electric motors 41, 51 produce the assist torques ormotivepowers correspondingto the steering torque on the basis of the motor controlling signal. The motive powers produced by the first and second electric motors 41, 51 are transmitted to a rack shaft 26c for turning the wheels 29, 29. The rack shaft 26c has the rack 25b formed thereon.

The assist torque mechanism 330 includes the steering torque sensor 31, the control section 32 and first and second assist torque producing devices 340, 350.

The first assist torque producing device 340 includes the first electric motor 41, a first belt transmission mechanism 341 and a ball screw 360. The first belt transmission mechanism 341 and the ball screw 360 are arranged to transmit the assist torque produced by the first electric motor 41 to the rack shaft 26c.

The second assist torque producing device 350 includes the second electric motor 51, a second belt transmission mechanism 351 and the ball screw 360. The second belt transmission mechanism 351 and the ball screw 360 are arranged to transmit the assist torque produced by the second electric motor 51 to the rack shaft 26c.

The assist torques produced by the first and second electric motors 41, 51 are transmitted via the ball screw 360 to the rack shaft 26c. The assist torques produced by the first and second electric motors 41, 51 and the steering torque produced by the driver are combined together to provide a composite torque. The composite torque is transmitted to the rack shaft 26c to thereby steer or turn the wheels 29, 29.

As is apparent from the foregoing description, there is provided the electric power steering apparatus 300 comprising: the steering wheel 21; the rack shaft 26c to be connected to the vehicle wheels 29, 29, the rack shaft 26c being connected to the steering wheel 21 through the steering shaft 22 and the rack-and-pinion mechanism 25; and the two electric motors 41, 51 positioned adjacent and connected to the rack shaft 26c through the transmission mechanisms 341, 351 and the ball screw 360.

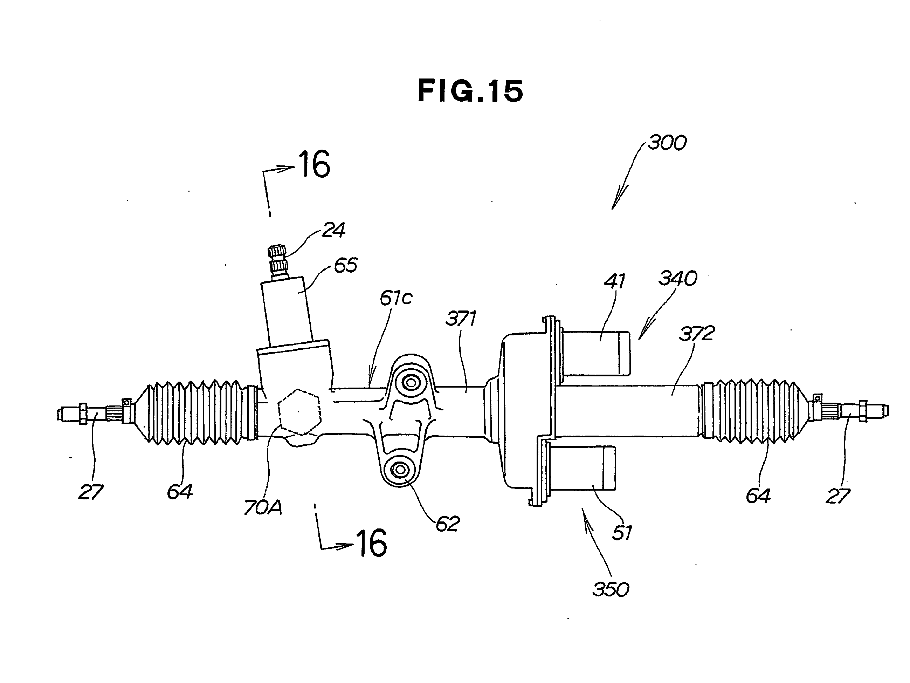

As shown in Fig. 15, the rack-and-pinion mechanism 25 and the ball screw 360 are housed in a housing 61c. The housing 61c has the first and second electric motors 41, 51 disposed along an outer peripheral surface thereof.

The housing 61c includes first and second housing portions 371, 372. The first housing portion 371 has one end bolted to one end of the second housing portion 372 to thereby provide the housing 61c with an elongated gear box configuration. The housing 61c extends laterally of the vehicle body.

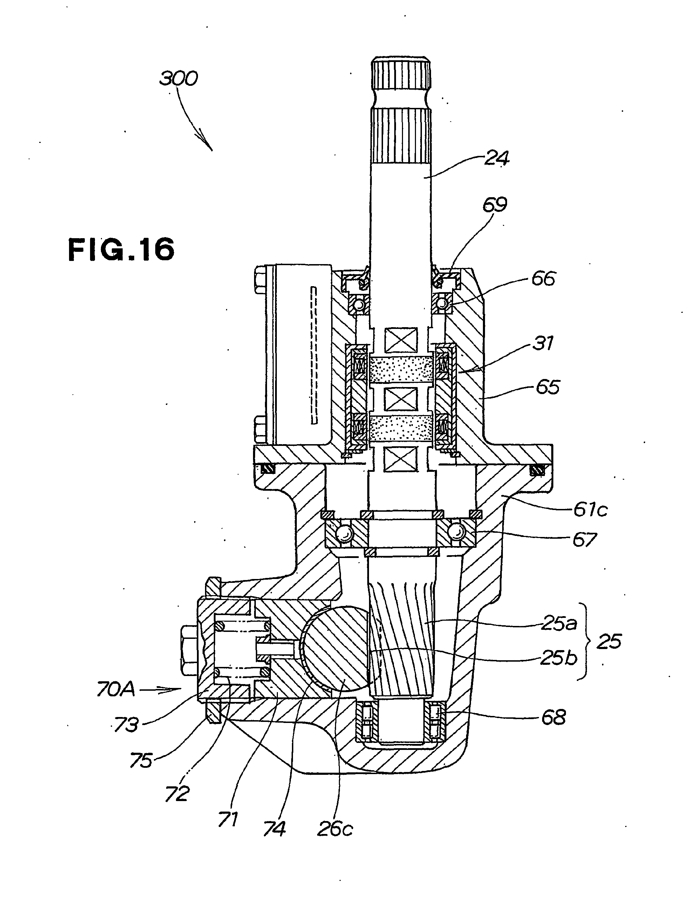

Fig. 16 is the view of Fig. 3 with the first worm gear mechanism 42 removed.

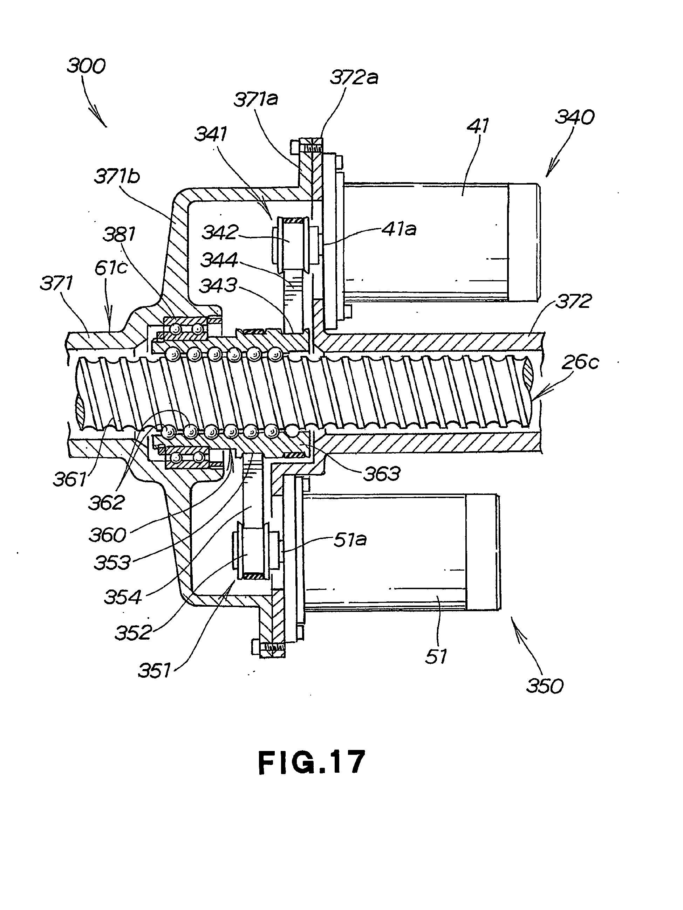

As shown in Fig. 17, more specifically, the first housing portion 371 has a flange 371a formed at the one end thereof while the second housing portion 372 has a flange 372a formed at the one end thereof. The flanges 371a, 372a are bolted together.

The first and second electric motors 41, 51 extend in parallel to the rack shaft 26c. More specifically, the first and second electric motors 41, 51 are disposed along the outer peripheral surface of the housing 61c with the motor shaft 41a and the motor shaft 51a extending in the same direction in parallel to the rack shaft 26c. The first and second electric motors 41, 51 are attached to the second housing portion 372. More specifically, the first and second electric motors 41, 51 are attached to the flange 372a. In Fig. 17, the first electric motor 41 is positioned above the rack shaft 26c while the second electric motor 51 is positioned below the rack shaft 26c. Also, the first and second electric motors 41, 51 are disposed in substantially vertical alignment with each other.

The first belt transmission mechanism 341 includes a first driving pulley 342 mounted or connected to the motor shaft 41a of the first electric motor 41, a first driven pulley 343 joined or mounted to a nut 363 of the ball screw 360, and a first belt 344 running over the pulleys 342, 343.

The second belt transmission mechanism 351 includes a second driving pulley 352 mounted or connected to the motor shaft 51a of the second electric motor 51, a second driven pulley 353 joined or mounted to the nut 363 of the ball screw 360, and a second belt 354 running over the pulleys 352, 353.

As shown in this figure, the mechanisms 341, 351 are provided alongside the flange 372a. As can be seen from this figure, the mechanism 341 disposed above the nut 363 and the rack 26c. The mechanism 351 is disposed below the nut 363 and the rack shaft 26c. The pulleys 343, 353 are positioned between the flange 372a and a bearing 381. The pulleys 343, 353 are juxtaposed longitudinally of the nut 363. The pulley 353 is positioned closer to the bearing 381 than the pulley 343.

The ball screw 360 is of conventional type and includes a threaded portion 361 serving as an external thread formed on the rack shaft 26c, plural balls 362 disposed on a peripheral surface of the threaded portion 361, and the nut 363 mounted on the balls 362. The nut 363 serves as an outer cylindrical member hollowed to allow the threaded portion 361 to extend therethrough. The nut 363 and the balls 362 are capable of transmitting to the threaded portion 361 the assist torques produced by the first and second electric motors 41, 51. The nut 363 has a threaded portion or a groove formed along an inner surface thereof. The groove is in the form of a helix. The balls 362 are guided along the groove. The nut 363 has a tube (not shown) formed therein. The tube extends between opposite ends of the groove. The tube is provided for guiding the respective balls, which have been guided to the one end of the groove, to the other end of the groove.

The first housing portion 371 includes a ball screw housing portion 371b integral with the flange 371a. The ball screw housing portion 371b supports the nut 363 by means of the bearing 381 such that the nut 363 is rotatable but unmovable axially.

As discussed with reference to Fig. 14 to Fig. 17, the electric power steering apparatus 300 includes the two electric motors 41, 51 disposed around the rack shaft 26c for transmitting to the wheels 29, 29 the steering torque applied to the steering wheel 21 and the assist torques produced by the electric motors 41, 51. The electric motors 41, 51 are connected through the mechanisms 341, 351 and the single ball screw 360 of small size to the rack shaft 26c. The two electric motors 41, 51 are positioned adjacent the rack shaft 26c in close proximity to each other. In other words, the electric motors 41, 51 can be provided compactly. The electric power steering apparatus 300 can be made small in size and therefore occupy a smaller space within the vehicle body.

Further, there is no need to provide any electric motor between the steering shaft 22 and the rack-and-pinion mechanism 25. In other words, between the steering shaft 22 and the rack- and-pinion mechanism 25, there can be formed a free space within which the electric motor would be otherwise positioned. Such a space can be used for other purposes.

Because the two electric motors 41, 51 are connected via the single ball screw 360 to the rack shaft 26c, no rack-and-pinion mechanism for connecting the electric motors 41, 51 to the rack shaft 26c is required. Accordingly, there is no need for any rack guide other than the rack guide 70A. The electric power steering apparatus 300 thus arranged is simple in construction.

The electric motors 41, 51 are connected through the belt transmission mechanisms 341, 351 and the ball screw 360 to the rack shaft 26c. This makes it possible to provide a reduced distance between the rack shaft 26c and each of the motor shafts 41a, 51a. The electric motors 41, 51 can thus also be positioned more freely.

The electric motors 41, 51 are well-known, less expensive ones rather than the aforementioned coaxial motors.

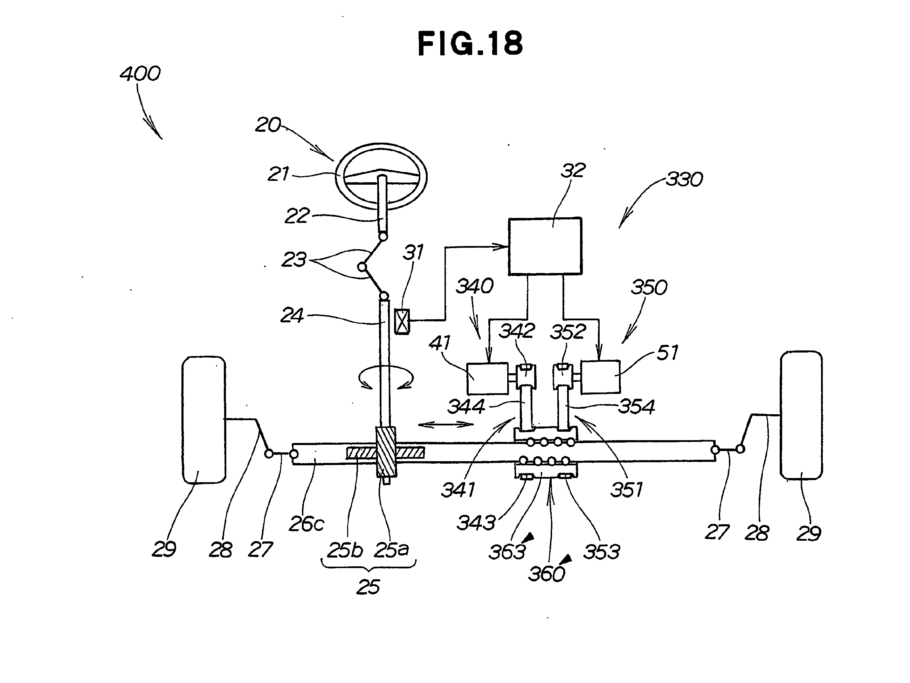

Referring to Fig. 18 through Fig. 20, there is shown an electric power steering apparatus 400 according to the fifth embodiment. The electric power steering apparatus 400 is the same as the electric power steering apparatus 300 except that the electric motors 41, 51 are positioned in different positions from those in the fourth embodiment. In Fig. 18 to Fig. 20, the same components of the apparatus 400 as those of the electric power steering apparatus 300 are identically numbered and their detail descriptions will be omitted.

As shown in Fig. 18, the steering wheel 21 is connected via the steering shaft 22 and the rack-and-pinion mechanism 25 to the rack shaft 26c. The rack shaft 26c is connected to the wheels 29, 29. The two electric motors 41, 51 are disposed around the rack shaft 26c. More specifically, these electric motors 41, 51 are connected through the first and second belt transmission mechanisms 341, 351 and a single ball screw 360' to the rack shaft 26c. The ball screw 360' includes the threaded portion 361, the plural balls 362, and a nut 363' mounted on the balls 362.

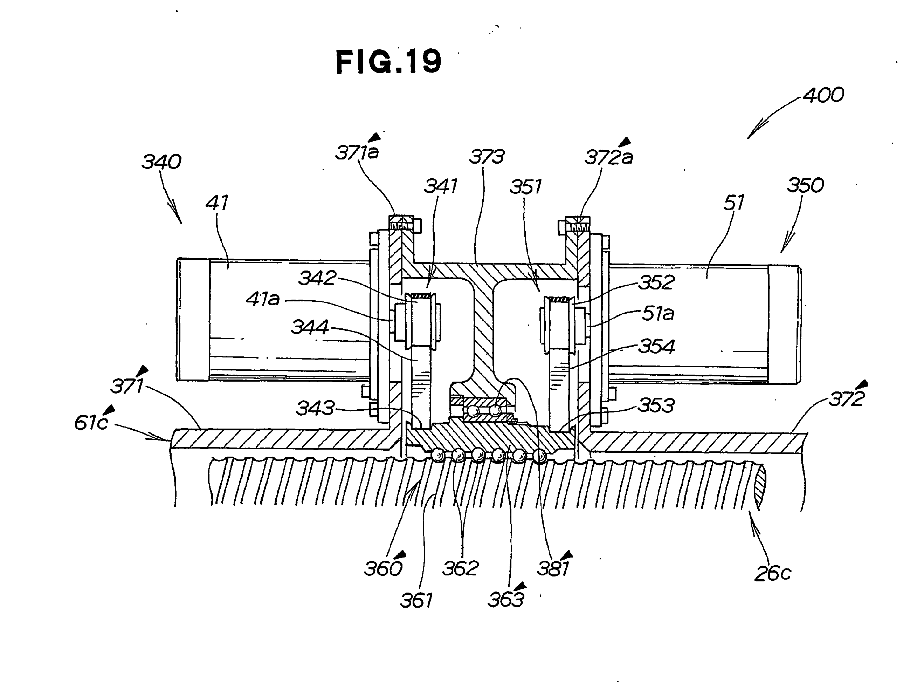

As shown in Fig. 19, the motor shaft 41a has its one end positioned in opposed relation to one end of the motor shaft 51a. The motor shafts 41a, 51a are parallel to the rack shaft 26c. The first and second electric motors 41, 51 are disposed along an outer peripheral surface of a housing 61c'. The electric motors 41, 51 extend in opposite directions and are disposed in parallel to the rack shaft 26c. The housing 61c' includes first and second housing portions 371', 372'. The first electric motor 41 is attached to the first housing portion 371' whilst the second electric motor 51 is attached to the second housing portion 372' .

The first housing portion 371' has a flange 371a' formed at the one end thereof while the second housing portion 372' has a flange 372a' formed at the one end thereof. The flanges 371a' , 372a' have an intermediate flange 373 interposed therebetween. The intermediate flange 373 is bolted to the flanges 371a' , 372a' . The intermediate housing 373 supports the nut 363' by means of a bearing 381' so that the nut 363' is rotatable but unmovable axially. The first electric motor 41 is attached to the flange 371a'. The second electric motor 51 is attached to the flange 372a' . As can be seen from this figure, the flanges 371a' , 372a' are positioned above the rack shaft 26c. The first driven pulley 343 is joined or mounted to the nut 363' of the ball screw 360' . Likewise, the second driven pulley 353 is joined or mounted to the nut 363'. As shown in Fig. 19, the mechanisms 341, 351 are provided above the nut 363' and the rack shaft 26c. The mechanism 341 is provided alongside the flange 371a'. The mechanism 351 is provided alongside the flange 372a' . The pulleys 343, 353 have the bearing 381' positioned therebetween.

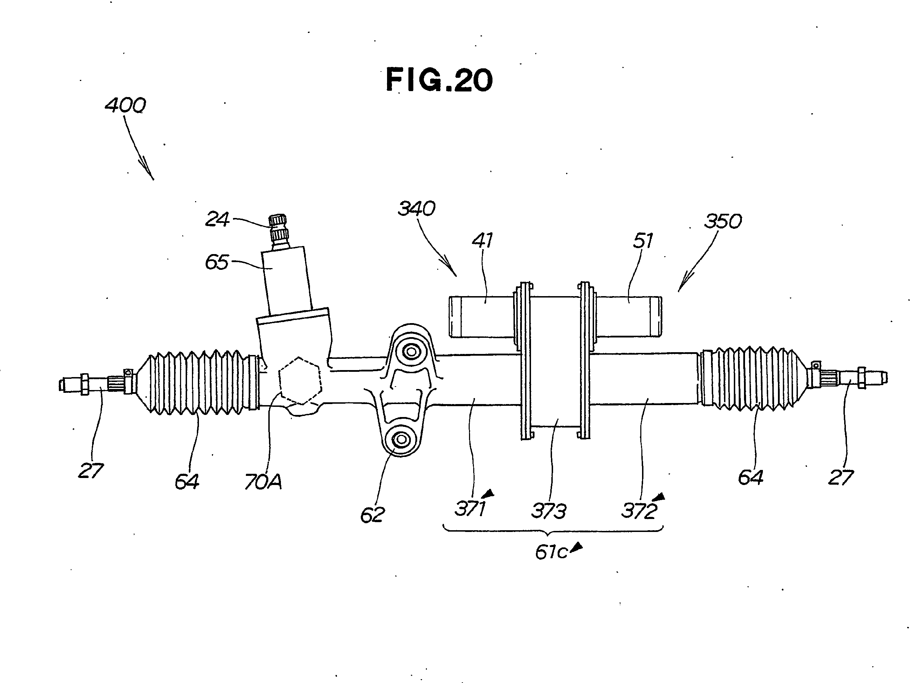

As shown in Fig. 20, the first and second electric motors 41, 51 are horizontally aligned with each other and disposed along the outer peripheral surface of the housing 61c'.

As described with reference to Fig. 18 through Fig. 20, the two electric motors 41, 51 are provided above the rack shaft 26c for transmitting to the wheels 29, 29 the steering torque applied to the steering wheel 21 and the assist torques produced by the electric motors 41, 51. More specifically, the electric motors 41, 51 are connected via the transmission mechanisms 341, 351 and the ball screw 360' of small size to the rack shaft 26c. The electric motors 41, 51 are positioned adjacent the rack shaft 26c in close proximity to each other. In other words, the electric motors 41, 51 are positioned compactly. The electric power steering apparatus 400 thus arranged are small in size.

Further, there is no need to provide any electric motor between the steering shaft 22 and the rack-and-pinion mechanism 25. In other words, between the steering shaft 22 and the rack- and-pinion mechanism 25, there can be formed a free space. Such a space can be used for other purposes.

Because the two electric motors 41, 51 are connected via the single ball screw 360' to the rack shaft 26c, no rack-and-pinion mechanism for connecting the electric motors 41, 51 to the rack shaft 26c is required. Consequently, there is no need for any rack guide other than the rack guide 70A. The thus arranged electric power steering apparatus 400 is simple in construction.

The electric motors 41, 51 are connected through the belt transmission mechanisms 341, 351 and the ball screw 360' to the rack shaft 26c. This makes it possible to provide a reduced distance between the rack shaft 26c and each of the motor shafts 41a, 51a. The electric motors 41, 51 can also be positioned more freely.

The electric motors 41, 51 are well-known, less expensive ones rather than the aforementioned coaxial motors.

The electric motors 41, 51 extend in opposite directions and are parallel to the rack shaft 26c. More specifically, the motor shaft 41a has the one end positioned in opposed relation to the one end of the motor shaft 51a. The electric motors 41, 51 are disposed along the outer peripheral surface of the housing 61c'. As can be seen from Fig. 20, the first and second electric motors 41, 51 are positioned above the rack shaft 26c to thereby provide increased height above the ground. The thus arranged electric motors 41, 51 are protected from foreign objects on the ground.

With the first and second electric motors 41, 51 positioned not in front of but above the housing 61c' , a vehicle body frame of the vehicle body can undergo plastic deformation in a stroke suitable for reducing collision energy when the vehicle body collides with some object positioned forwardly thereof.

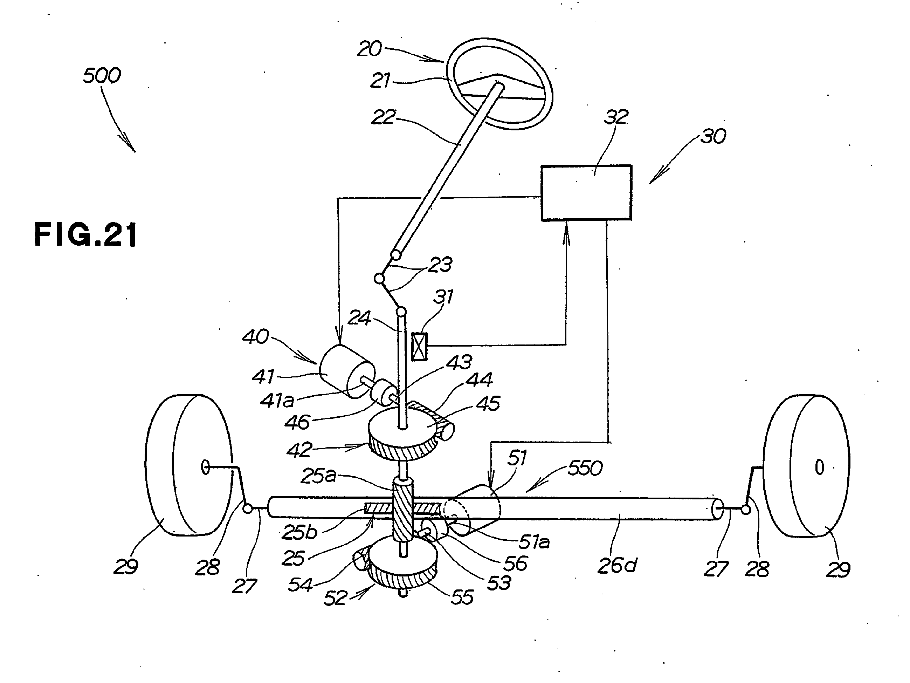

Referring to Fig. 21 through Fig. 23, there is shown an electric power steering apparatus 500 according to the sixth embodiment. The electric power steering apparatus 500 is the same as the electric power steering apparatus 10 except that the assist torque mechanism 30 includes a fifth assist torque producing device 550 instead of the assist torque producing device 50 as will be discussed below. In Fig. 21 to Fig. 23, the same components of the electric power steering apparatus 500 as those of the electric power steering apparatus 10 are identically numbered and their detail descriptions will be omitted.

As shown in Fig. 21, the assist torque mechanism 30 includes the steering torque sensor 31, the control section 32, the first assist torque producing device 40 and the fifth assist torque producing device 550. The fifth assist torque producing device 550 includes the second electric motor 51 and the second worm gear mechanism 52.

Like the first assist torque producing device 40, the fifth assist torque producing device 550 includes the second worm wheel 55 mounted on the pinion shaft 24. This arrangement eliminates the need to provide the assist torque producing device 550 with the assist rack-and-pinion mechanism and assist pinion shaft as found in the second assist torque producing device 50 of the apparatus 10 in the first embodiment of the present invention.

The electric motors 41, 51 of the assist torque mechanism 30 of the electric power steering apparatus 500 produce the assist torques to be applied to the pinion shaft 24. Accordingly, the rack-and-pinion mechanism 25 transmits to a rack shaft 26d the assist torques applied to the pinion shaft 24 and the steering torque applied by the driver to the steering wheel 21. No rack other than the rack 25b is formed on the rack shaft 26d.

That is, the steering torque produced by the driver and the assist torques produced by the first and second electric motors 41, 51 are combined together to provide a composite torque. The composite torque is transmitted via the rack-and-pinion mechanism 25 to the rack shaft 26d to thereby steer or turn the wheels 29, 29.

As is apparent from Fig. 21, the two electric motors 41, 51 are provided separately from each other and connected to the pinion shaft 24. The pinion 25a is positioned between the electric motors 41, 51. The two electric motors 41, 51 produce the motive powers to be applied to the pinion shaft 24.

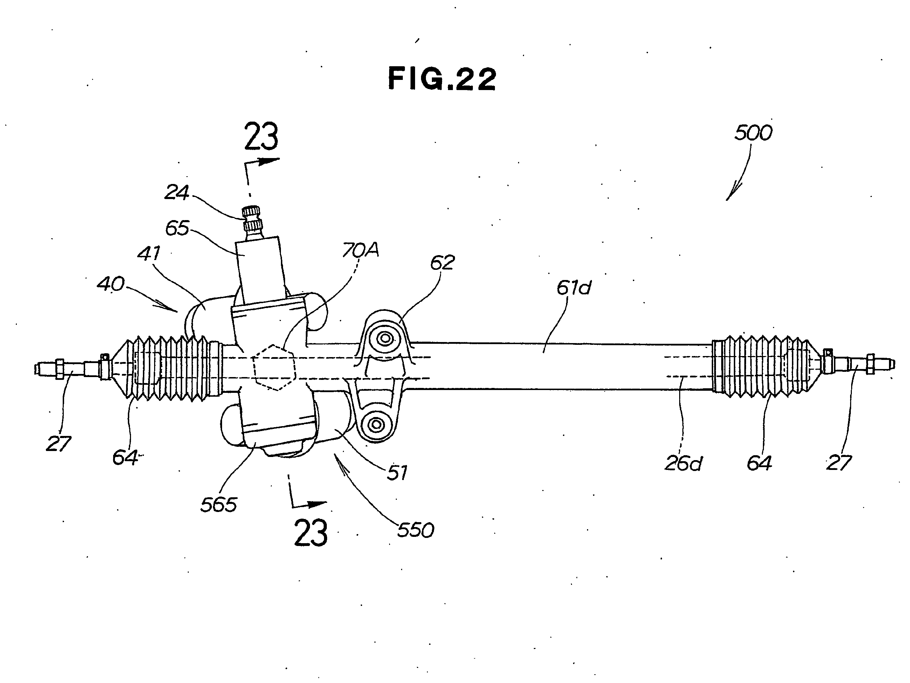

As shown in Fig. 22, the first electric motor 41 is positioned above the rack shaft 26d while the second electric motor 51 is positioned below the rack shaft 26d.

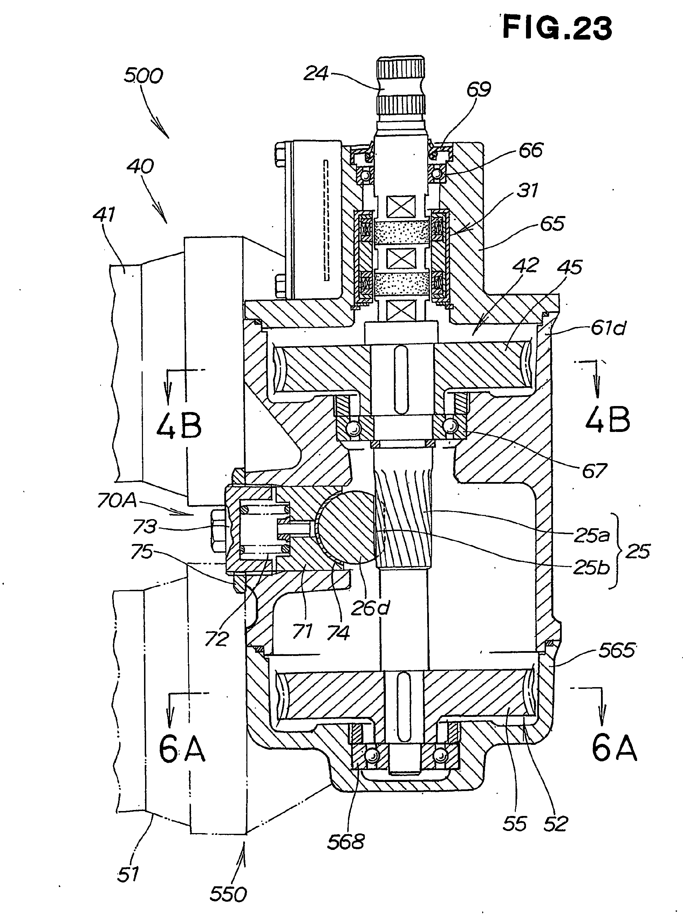

As shown in Fig. 23, the electric power steering apparatus 500 includes the pinion shaft 24, the rack-and-pinion mechanism 25, the steering torque sensor 31, the first and second worm gear mechanisms 42, 52 and a housing 61d. The housing 61d has the first worm gear mechanism 42 and the rack-and-pinion mechanism 25 housed therein. The housing 61d has upper and lower ends opened upwardly and downwardly, respectively. The upper and lower ends of the housing 61d are closed by the lids 65, 565, respectively. Reference numeral 568 denotes a bearing.

Fig. 23 provides a cross-sectional view of Fig. 4 taken along line 4B-4B thereof to show in cross-section the first worm gear mechanism 42.

Also, Fig. 23 provides a cross-sectional view of Fig. 6 taken along line 6A-6A thereof to shown in cross-section the second worm gear mechanism 52 with the assist pinion shaft 57 replaced with the pinion shaft 24.

Adjacent the pinion shaft 24 for transmitting to the rack shaft 26d the steering torque applied to the steering wheel 21, the two electric motors 41, 51 are provided separately from each other in such a manner as to provide the assist torques to the pinion shaft 24. The pinion 25a is provided between the electric motors 41, 51. The electric motors 41, 51 produce the motive powers to be applied to the pinion shaft 24. Because the electric motors 41, 51 are thus disposed compactly or closely to the pinion shaft 24, the electric power steering apparatus 500 are small in size.

With this arrangement, there is no need to connect any electric motor to the rack shaft 2 6d. There is no need to provide additional members for connecting the electric motor to the rack shaft 26d, either. Therefore, there can be formed a free space around the rack shaft 26d. Such a space may be used for other purposes.

As shown in Fig. 23, all the rack-and-pinion mechanism 25 and the two transmitting members (i.e., the first and second worm gear mechanisms 42, 52) for transmitting the motive powers produced by the first and second electric motors 41, 51, respectively, are mounted to the pinion shaft 24. This means that at the time the rack-and-pinion mechanism 25 is mounted to the pinion shaft 24 with the electric motors 41, 51 disposed adjacent the pinion shaft 24, inspection can be carried out on the pinion shaft 24 to see if the pinion shaft 24 provides appropriate performance. Thus, all the pinion shafts having undergone the inspection can provide substantially the same performance.

If the electric motor 51 were provided between the first electric motor 41 and the pinion 25a with the second worm gear mechanism 52 positioned between the first worm gear mechanism 42 and the pinion 25a, there would be provided an increased distance between the pinion 25a and the first worm wheel 45 of the first worm gear mechanism 42 positioned at an upper level than the second worm gear mechanism 52. This undesirably results in an increased distance between the pinion 25a and a distal end of the pinion shaft 24 connected to the universal joint 23.

For the electric power steering apparatus 500, however, the first worm wheel 45 can be positioned a reduced distance away from the pinion shaft 25a. More specifically, the distance between the pinion 25a and the first worm wheel 45 with the second worm gear mechanism 52 positioned below the pinion 25a is smaller than with the second worm gear mechanism 52 positioned above the pinion 25a. This results in a reduced distance between the pinion 25a and the distal end of the pinion shaft 24.

Providing such a reduced distance helps keep the pinion shaft 24 rigid. The electric power steering apparatus 500 has the advantage that vibration occurred due to meshing engagement between the rack 25b and the pinion 25a is prevented from being transmitted via the pinion shaft 24 to the steering wheel 21.

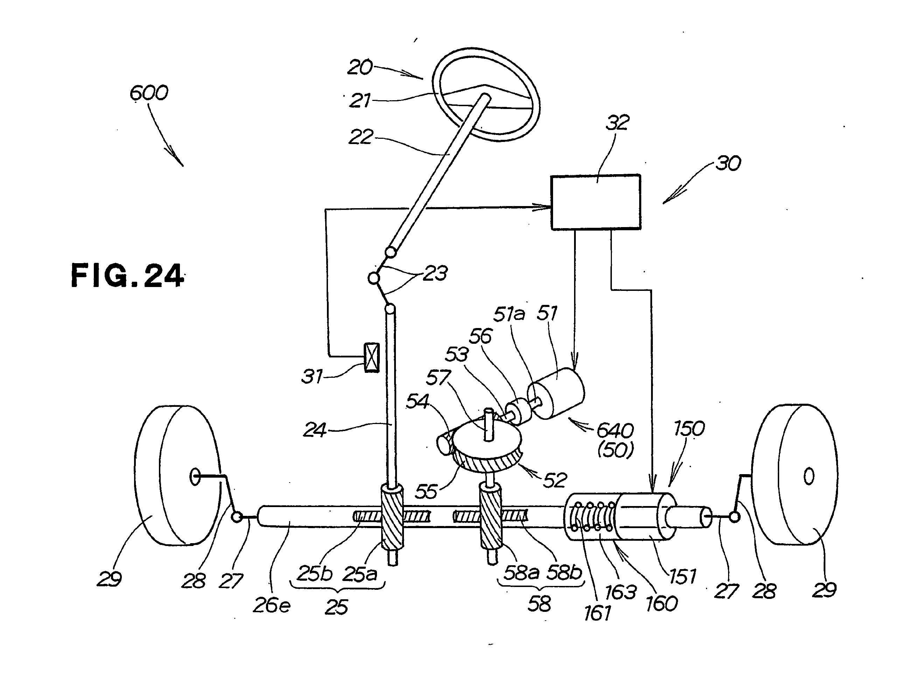

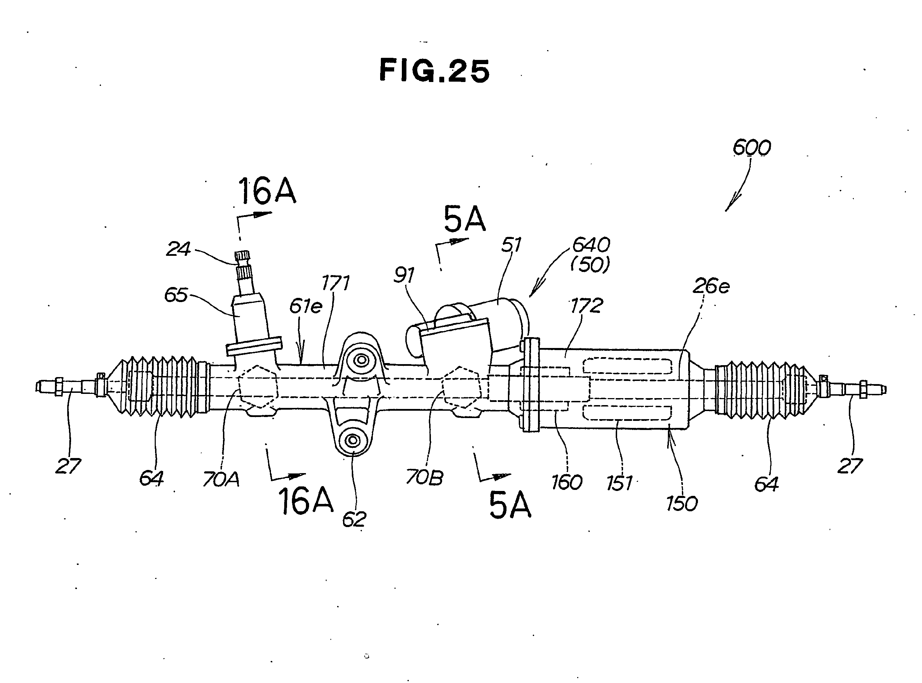

Referring to Fig. 24 and Fig. 25, there is shown an electric power steering apparatus 600 according to a seventh embodiment of the present invention. As will be described later, the electric power steering apparatus 600 is the same as the electric power steering apparatus 100 except that the assist torque mechanism 30 includes a sixth assist torque producing device 640 instead of the first assist torque producing device 40. In Fig. 24 and Fig. 25, the same components of the electric power steering apparatus 600 as those of the electric power steering apparatus 100 are identically numbered and their detail descriptions will be omitted.

As shown in Fig. 24, the electric power steering apparatus 600 includes the third assist torque producing device 150 and the sixth assist torque producing device 640 serving the same function as the second assist torque producing device 50 of the electric power steering apparatus 10.

The sixth assist torque producing device 640 includes the second electric motor 51, the second worm gear mechanism 52, the assist pinion shaft 57 and the assist rack-and-pinion mechanism 58.

The steering torque sensor 31 detects the steering torque applied to the steering wheel 21 to produce the detection signal indicative of the detection of the steering torque. The control section 32 produces the motor controlling signal on the basis of the detection signal. The second and third electric motors 51, 151 produce the assist torques corresponding to the steering torque on the basis of the motor controlling signal.

The assist torque produced by the second electric motor 51 can be transmitted via the coupling 56, the second worm gear mechanism 52, the assist pinion shaft 57 and the assist rack-and-pinionmechanism58 to a rack shaft 26e. The assist torque produced by the third electric motor 151 can be transmitted via the ball screw 160 to the rack shaft 26e. The rack shaft 26e has the racks 25b, 58b and the threaded portion 161 formed thereon.

The steering torque the driver applies to the steering wheel 21, the assist torque produced by the electric motors 51 and the assist torque produced by the electric motor 151 can be combined together to provide a composite torque. The composite torque is transmitted to the rack shaft 26e to thereby turn the wheels 29, 29.

The assist pinion shaft 57 is mounted or connected to the rack shaft 26e through the assist rack-and-pinion mechanism 58. The second electric motor 51 produces the motive power to be applied to the assist pinion shaft 57 while the third electric motor 151 produces the motive power to be applied to the rack shaft 26e by means of the ball screw 160.

As shown in Fig. 25, the pinion shaft 24, the sixth assist torque producing device 640 and the third torque device 150 are mounted to a housing 61e.

The sixth assist torque producing device 640 is identical in construction to the second assist torque producing device 50 as shown in Fig. 5 and Fig. 6. Fig. 25 provides a cross-sectional viewof Fig. 5 taken along line 5A-5A thereof to show in cross-section the second assist torque producing device 50, i.e., the sixth assist torque producing device 640.

Fig. 25 provides a cross-sectional view of Fig. 16 taken along line 16A-16A thereof to show the pinion shaft 24, the rack-and-pinion mechanism 25 and the steering torque sensor 31.

As can be seen from Fig. 24 and Fig. 25, the assist pinion shaft 57 is connected via the assist rack-and-pinion mechanism 58 to the rack shaft 26e connected through the steering shaft 22 to the steering wheel 21. The second electric motor 51 produces the motive power to be applied to the assist pinion shaft 57 whilst the third electric motor 151 produces the motive power to be applied to the rack shaft 26e by means of the ball screw 160 of small size. These electric motors 51, 151 are positioned compactly or adjacent the rack shaft 26e. The electric power steering apparatus 600 having the thus compactly arranged electric motors 51, 151 can be made small in size.

No electric motor is connected between the steering shaft 22 and the rack shaft 26e. Thus, there can be formed a free space around the steering shaft 22 and the pinion shaft 24. Such a space may be used for other purposes.

The transmission member (i.e., the rack-and-pinionmechanism 25) for transmitting to the rack shaft 26e the steering torque applied to the steering wheel 21 undergoes no motive power produced by the electric motors. This arrangement helps the transmission member maintain sufficient strength. The steering torque, the motive power produced by the electric motor 51 and the motive power produced by the electric motor 151 are transmitted to different three portions of the rack shaft 26e. This arrangement helps the rack shaft 26e maintain sufficient strength.

In all the embodiments as discussed with reference to Fig. 1 through Fig. 25, the pinion shaft 24 may be provided separately from or independently of the steering shaft 22 instead of being connected directly to the steering shaft 22. In such a case, the steering torque sensor 31 detects a steering torque applied to the steering wheel 22 to produce a detection signal indicative of the detection of the steering torque. On the basis of the detection signal, any motive power source, for example, an electric motor other than the afore- mentioned electric motors produces a torque equal to the steering torque and then transmits the torque to the pinion shaft 24.

### Industrial Applicability

With the arrangement as explained above, the inventive electric power steering apparatus includes two electric motors. These electric motors are provided separately from each other. The two electric motors can be freely positioned within a space formed in a vehicle. The apparatus is useful particularly in a large-sized vehicle.

## Claims

1. An electric power steering apparatus (300, 400) comprising:
a steering wheel (21);
a rack shaft (26) to be connected to vehicle wheels (29, 29), the rack shaft (26) being connected to the steering wheel (21) through a steering shaft (22) and a rack-and-pinion mechanism (25);
two electric motors (41, 51) positioned adjacent the rack shaft (26),
**characterized in that** the two electric motors (41, 51) are connected to the rack shaft (26) through belt transmission mechanisms (341, 351) and a single ball screw (260, 260').

2. The electric power steering apparatus (300) as recited in claim 1,
wherein the belt transmission mechanisms (341, 351) have pulleys (343, 353) being juxtaposed longitudinally of a nut (363) of the ball screw (360).

3. The electric power steering apparatus (400) as recited in claim 1,
wherein the belt transmission mechanisms (341, 351) have driven pulleys (343, 353) joined or mounted to a nut (363') of the ball screw (360'), the driven pulleys (343, 353) having a bearing (381') positioned therebetween.

## Patentansprüche

1. Elektrische Servolenkvorrichtung (300, 400), umfassend:
ein Lenkrad (21);
eine Zahnstange (26), die mit Fahrzeugrädern (29, 29) zu verbinden ist, wobei die Zahnstange (26) mit dem Lenkrad (21) durch eine Lenkwelle (22) und einen Zahnstangen- und Ritzelmechanismus (25) verbunden ist;
zwei Elektromotoren (41, 51), die benachbart der Zahnstange (26) angeordnet sind,
**dadurch gekennzeichnet, dass** die zwei Elektromotoren (41, 51) mit der Zahnstange (26) durch Riemengetriebemechanismen (341, 351) und einen einzigen Kugelumlauf (360, 360') verbunden sind.

2. Elektrische Servolenkvorrichtung (300) nach Anspruch 1, worin die Riemengetriebemechanismen (341, 351) Riemenscheiben (343, 353) aufweisen, die längs einer Mutter (363) des Kugelumlaufs (360) nebeneinander angeordnet sind.

3. Elektrische Servolenkvorrichtung (400) nach Anspruch 1, worin die Riemengetriebemechanismen (341, 351) Abtriebsriemenscheiben (343, 353) aufweisen, die mit einer Mutter (363') des Kugelumlaufs (360') verbunden oder daran angebracht sind, wobei die Abtriebsriemenscheiben (343, 353) ein dazwischen angeordnetes Lager (381') aufweisen.

## Revendications

1. Dispositif de direction électrique (300, 400) comprenant :
un volant de direction (21) ;
un arbre à crémaillère (26) destiné être relié aux roues de véhicule (29, 29), l'arbre à crémaillère (26) étant relié au volant de direction (21) par le biais d'un arbre de direction (22) et d'un mécanisme d'engrenages à crémaillère (25) ;
deux moteurs électriques (41, 51) positionnés de façon adjacente à l'arbre à crémaillère (26),
**caractérisé en ce que** les deux moteurs électriques (41, 51) sont reliés à l'arbre à crémaillère (26) par le biais de mécanismes de transmission par courroie (341, 351) et d'une seule vis à billes (260, 260').

2. Dispositif de direction électrique (300) selon la revendication 1,
dans lequel les mécanismes de transmission par courroie (341, 351) ont des poulies (343, 353) juxtaposées longitudinalement à un écrou (363) de la vis à billes (360).

3. Dispositif de direction électrique (400) selon la revendication 1,
dans lequel les mécanismes de transmission par courroie (341, 351) ont des poulies menées (343, 353) assemblées ou montées sur un écrou (363') de la vis à billes (360'), les poulies menées (343, 353) ayant un palier (381') positionné entre elles.
